# EUROPEAN PATENT APPLICATION

(11) **EP 4 815 168 A1**
(43) Date of publication of application: **30.09.2026**
(21) Application number: 25772148.0
(22) Date of filing: 12.03.2025
(51) Int. Cl.: H01M 50/451, H01M 50/446, H01M 50/489, H01M 50/431, H01M 50/414, H01M 10/052

(54) **SEPARATOR FOR ELECTROCHEMICAL DEVICE AND METHOD FOR MANUFACTURING SAME**

(30) Priority: 12.03.2024 KR 20240034755
(71) Applicant: LG Chem, Ltd., Seoul 07336 (KR)
(72) Inventor: LEE, Joo-Sung, Daejeon 34122 (KR); JIN, Sun-Mi, Daejeon 34122 (KR); KIM, Kee-Yong, Daejeon 34122 (KR); LEE, Ji-Myeong, Daejeon 34122 (KR)
(74) Representative: Hoffmann Eitle
(86) International application number: PCT/KR2025/099724
(87) International publication number: WO 2025/193062

(57) **Abstract**

A separator according to the present disclosure not only has excellent adhesion to an electrode but also ensures sufficient porosity, thereby exhibiting excellent resistance and ion conductivity properties. Meanwhile, the time taken for a lamination process may be reduced during electrode assembly manufacturing, thereby achieving high process efficiency in battery manufacturing. Further, since an electrolyte liquid may flow into an interface between an electrode and the separator, electrolyte liquid impregnation may be improved when the separator of the present disclosure is applied to a battery. In addition, a decrease in adhesion is limited even after electrolyte liquid impregnation, and therefore, an effect of providing flexural strength to a manufactured cell or preventing the cell from bending may be expected.

## Description

### Technical Field

This application claims priority to Korean Patent Application No. 10-2024-0034755 filed on March 12, 2024, the disclosure of which is incorporated herein by reference in its entirety. The present disclosure relates to a separator for an electrochemical device such as a lithium-ion secondary battery.

### Background Art

Non-aqueous secondary batteries represented by lithium-ion secondary batteries are widely used as power sources for portable electronic devices such as laptops, mobile phones, digital cameras, and camcorders. In addition, in recent years, application of these batteries to automobiles and the like is also being considered due to their characteristic of having a high energy density.

In lithium secondary batteries currently in production, a porous polymer substrate using a polyolefin-based polymer resin or the like is used as a separator substrate in order to prevent a short-circuit between a positive electrode and a negative electrode. However, the polymer substrate has a problem in that it shrinks or melts at high temperatures, exhibiting low heat resistance. Accordingly, when the temperature of the battery increases to a high temperature due to internal or external stimuli, the separator may shrink or melt, increasing the likelihood that the positive electrode and the negative electrode come into contact with each other, resulting in a short circuit. As a result, electrical energy may be rapidly released, leading to explosion or ignition of the battery.

Accordingly, to address these issues, a method of improving heat resistance by forming a porous filler layer in which inorganic particles and a binder resin are mixed on at least one surface of a polymer substrate is widely used. However, the filler layer is required to have sufficient porosity in terms of ensuring an ion transfer path and electrolyte liquid impregnation. The pores of the filler layer originate from an interstitial volume between inorganic particles. When the content of the binder resin increases, the interstitial volume is blocked by the binder resin, making it difficult to secure sufficient porosity. On the other hand, when the content of the binder resin is not sufficient, the electrode and the separator are not closely adhered to each other, and the electrode and the separator may be separated during a battery manufacturing process or battery operation.

In order to secure the porosity of a coating layer of the separator, a technique is known in which an organic binder is disposed on the surface of the separator using a humid-induced phase separation process, thereby improving adhesion with an electrode. However, such a humid-induced phase separation process not only requires very delicate temperature/humidity control, but also exhibits large variations in adhesion depending on drying conditions. In addition, when an aqueous binder is used, there is a problem in that such a phase separation process may not be applied.

Meanwhile, a technique has been proposed in which a separator is manufactured by forming a separate electrode adhesive layer on the outermost surface of the separator. However, since the surface of the separator is covered with an organic binder, there are problems of increased resistance and reduced permeability, and there is a disadvantage in that an additional coating process is required to coat the adhesive layer.

In order to solve such problems, a technique has been proposed in which an aqueous composition that uses an aqueous solvent and a water-dispersible emulsion binder is coated on a separator substrate when forming the filler layer. However, when such an aqueous composition is used, aggregation of the emulsion binder particles occurs, causing problems of reduced permeability and ion conductivity.

Meanwhile, an electrode assembly may be typically manufactured by a roll-to-roll continuous process, and herein, a lamination process of pressing the laminated electrode and separator (applying hot pressing as necessary) is performed. In order to achieve electrode-separator bonding strength at a desired level, a sufficient lamination process time needs to be ensured, however, this may lead to a problem of lowering productivity such as reducing a production speed.

Accordingly, in a separator for an electrochemical device, there is a need for continuous research and development for securing sufficient porosity and adhesion (between an electrode and a separator) and process efficiency.

### DISCLOSURE

### Technical Problem

The present disclosure is directed to providing a separator for an electrochemical device having high adhesion to an electrode, high resistance properties and high porosity, and a method for manufacturing the same. In addition, the present disclosure is directed to providing a separator capable of improving battery production efficiency such as shortening the time required for electrode-separator lamination. It will be readily apparent that other objects and advantages of the present disclosure may be achieved by means or methods set forth in the claims and combinations thereof.

### Technical Solution

One aspect of the present disclosure relates to a separator for an electrochemical device. The separator includes: a porous polymer substrate; and an inorganic coating layer covering one surface or both surfaces of the porous polymer substrate, wherein the inorganic coating layer includes a plurality of inorganic particles, a binder resin, and a plurality of adhesive polymer columns, the polymer column is a particulate material having a predetermined volume, the particulate material being made of a polymer material and having no pores, and the inorganic coating layer has at least all or a portion of the surface subjected to corona discharge treatment. The inorganic coating layer may include polymer column(s) semi-buried in the inorganic coating layer so that at least a portion of the surface thereof protrudes, polymer column(s) disposed on the surface of the inorganic coating layer, or both.

In one aspect of the present disclosure, the inorganic coating layer includes both first polymer column(s) semi-buried in the inorganic coating layer so that at least a portion of the surface thereof protrudes and second polymer column(s) disposed on the surface of the inorganic coating layer, and a diameter D₅₀ of the second polymer column is greater than or equal to a diameter D₅₀ of the first polymer column.

In any one of the above-described aspects, in the inorganic coating layer, at least one of the polymer columns may be spaced apart from another polymer column by a predetermined distance, and distributed in a sea-island pattern.

In any one of the above-described aspects, at least a portion of the first polymer column may be exposed on the surface of the inorganic coating layer while another portion thereof is in contact with the surface of the porous substrate.

In any one of the above-described aspects, in the inorganic coating layer, spaces between the first polymer columns are filled with an inorganic particle-filled portion, and the inorganic particle-filled portion may include inorganic particles and a binder resin.

In any one of the above-described aspects, the polymer column may have a storage modulus (G') of 100 Pa to 3,500 Pa or less at room temperature.

In any one of the above-described aspects, the polymer column may have a phase angle of less than 35° at room temperature, and the phase angle (δ) may be calculated according to the following Equation 1.

$δ = {tan}^{- 1} \left(G"/G′\right)$

In Equation 1, G' is a storage modulus (G'), and G" is a loss modulus (G").

In any one of the above-described aspects, the polymer column may have a storage modulus (G') of 0.05 to 10 at 60°C.

In any one of the above-described aspects, the polymer column may have a ratio of a storage modulus (G') at 60°C to a storage modulus (G') at room temperature (G' (60°C)/G' (room temperature)) of 0.1 or less.

In any one of the above-described aspects, the polymer column may have at least one tan δ peak in a range of 45°C to 80°C when measured using a dynamic mechanical analyzer (DMA, Rheovibron).

In any one of the above-described aspects, the polymer column may have a degree of crosslinking (gel fraction) of 50% or greater.

In any one of the above-described aspects, a thickness (Tᵢ) of the inorganic particle-filled portion may be 5% or greater and 40% or less of the diameter D₅₀ of the polymer column.

In any one of the above-described aspects, the inorganic particle-filled portion may have a height (Tᵢ) of 2 µm or less than 2 µm.

In any one of the above-described aspects, the D₅₀ of the polymer column may be at least twice a D₅₀ of the inorganic particles.

In any one of the above-described aspects, the thickness (Tᵢ) of the inorganic particle-filled portion may be 85% or less of the D₅₀ of the polymer column.

In any one of the above-described aspects, a D₁₀ of the polymer column may be 30% or greater of the D₅₀ of the polymer column, and a D₉₀ of the polymer column may be 200% or less of the D₅₀ of the polymer column.

In any one of the above-described aspects, an area occupied by the polymer columns may be 10% to 50% relative to 100% of the surface area of the inorganic coating layer based on a top-view image of the separator.

In any one of the above-described aspects, the inorganic coating layer may have a pore structure formed by an interstitial volume between the inorganic particles.

In any one of the above-described aspects, the polymer column(s) semi-buried in the inorganic coating layer so that at least a portion of the surface thereof protrudes are the first polymer column(s), and the first polymer column may have a D₅₀ of 2.0 µm to 7.0 µm.

In any one of the above-described aspects, the polymer column(s) disposed on the surface of the inorganic coating layer are the second polymer column(s), and the second polymer column may have a D₅₀ of about 0.1 µm to 1.5 µm.

In the present disclosure, each of the embodiments may be implemented independently. Alternatively, two or more of the embodiments may be implemented in combination.

### Advantageous Effects

A separator according to the present disclosure not only has excellent adhesion to an electrode but also ensures sufficient porosity, thereby exhibiting excellent resistance and ion conductivity properties. Meanwhile, the time taken for a lamination process can be reduced during electrode assembly manufacturing, thereby achieving high process efficiency in battery manufacturing. Further, since an electrolyte liquid can flow into an interface between an electrode and the separator, electrolyte liquid impregnation can be improved when the separator of the present disclosure is applied to a battery. In addition, a decrease in adhesion is limited even after electrolyte liquid impregnation, and therefore, an effect of providing flexural strength to a manufactured cell or preventing the cell from bending can be expected.

### Brief Description of Drawings

Drawings accompanying the present specification illustrate preferred examples of the present disclosure, and serve to provide a better understanding of the technical idea of the present disclosure together with the description of the invention provided above, and therefore, the present disclosure is not construed as being limited to matters described in these drawings. Meanwhile, shapes, sizes, scales or proportions of elements in the drawings included in the present specification may be exaggerated for the purpose of clearer description.
FIG. 1 is a diagram schematically illustrating a first embodiment of a separator of the present disclosure.
FIG. 2 is a diagram schematically illustrating a second embodiment of a separator of the present disclosure.
FIG. 3 is a diagram schematically illustrating a third embodiment of a separator of the present disclosure.
FIG. 4 shows results of verifying wet adhesion properties between an electrode and a separator after disassembling a battery manufactured according to Example 1 of the present disclosure.
FIG. 5 shows results of verifying wet adhesion properties between an electrode and a separator after disassembling a battery manufactured according to Example 2 of the present disclosure.
FIG. 6 shows results of verifying wet adhesion properties between an electrode and a separator after disassembling a battery manufactured according to Comparative Example 1 of the present disclosure.

### Mode for Invention

Hereinafter, the present disclosure will be described in detail. Prior to this, terms or words used in the present specification and the claims should not be interpreted limitedly to common or dictionary meanings, and need to be interpreted as meanings and concepts corresponding to the technical idea of the present disclosure based on a principle in which the inventors may suitably define the concept of terms in order to describe their own invention in the best possible way. Accordingly, in the embodiments described in the present specification and constitutions illustrated in drawings are just most preferred one embodiment of the present disclosure and do not entirely represent the technical idea of the present disclosure, and therefore, it needs to be understood that there may be various equivalents and modified examples that may replace these at the time of filing.

Throughout the present specification, a description of a certain part "including" a certain component means that it may further include other components, and does not exclude other components unless particularly stated on the contrary.

In addition, terms such as "about" or "substantially" used throughout the present specification are used to indicate, when manufacturing and material tolerances inherent to the mentioned meaning are presented, the number or a meaning close to the number, and are used to prevent unscrupulous infringers from unfairly using the disclosure stating precise or absolute numbers to help understand the present application.

Throughout the present specification, a description of "A and/or B" refers to "A or B, or both".

Throughout the present specification, a particle diameter D₅₀ refers to a particle diameter at a 50% point in the cumulative particle count distribution based on the particle diameter. In other words, the D₅₀ refers to a particle diameter at a 50% point in the cumulative particle count distribution based on the particle diameter. In addition, a D₁₀ refers to a particle diameter at a 10% point in the cumulative particle count distribution based on the particle diameter, and a D₉₀ refers to a particle diameter at a 90% point in the cumulative particle count distribution based on the particle diameter. The particle diameter may be measured using a laser diffraction method. Specifically, a powder to be measured is dispersed in a dispersion medium, and then introduced to a commercially available laser diffraction particle size analyzer (for example, Microtrac S3500), and particle size distribution is calculated by measuring differences in diffraction patterns according to particle sizes as the particles pass through a laser beam. D₁₀, D₅₀, D₉₀ and D₁₀₀ may be measured by calculating particle diameters at 10%, 50%, 90% and 100% points, respectively, in the cumulative particle count distribution based on the particle diameter in the analyzer.

Specific terms used in the following detailed description of the invention are for convenience only and are not intended to be limiting. Terms such as 'left', 'right', 'upper' and 'lower' may indicate directions in the drawings referred to and should not be limiting. Words such as 'inward' and 'outward' respectively indicate directions toward or away from a geometric center of a designated device, system and members thereof. Terms such as 'front', 'rear', 'upward' and 'downward', and words and phrases relating thereto indicate locations and orientations in the drawings referred to and should not be limiting. Such terms include the words listed above, derivatives thereof and words of similar meaning.

In the present disclosure, a glass transition temperature (Tg) may be measured through a differential scanning calorimetry (DSC) curve obtained from a DSC analyzed at a heating rate of 10°C/min. As condition of the measurement, a method of cooling a small amount of each sample (10 mg to 15 mg) from ambient temperature to -30°C, heating the sample to 200°C at 10°C/min, then cooling the sample to -30°C, and then reheating the sample at 10°C/min may be referred to.

In the present specification, dry adhesion refers to adhesion in a state in which a separator is not brought into contact with an electrolyte liquid, and wet adhesion refers to adhesion after a separator is brought into contact with an electrolyte liquid. The 'contact with an electrolyte liquid' may refer to a state in which a separator is impregnated with an electrolyte liquid.

Upper and lower limits described in the present specification may each be selectively combined, and various specific ranges may be set through combinations of the provided values.

In the present specification, the term 'polymer column' collectively refers to both first and second polymer columns unless otherwise specified.

The present disclosure relates to a separator for an electrochemical device, and an electrochemical device including the same. In the present disclosure, the electrochemical device is a device converting chemical energy into electrical energy through an electrochemical reaction, and is a concept including a primary battery and a secondary battery. The secondary battery is rechargeable, and is a concept encompassing a lithium-ion battery, a nickel-cadmium battery, a nickel-hydrogen battery and the like.

### Separator

In one embodiment of the present disclosure, the separator includes: a porous substrate 10; and an inorganic coating layer 20 formed on at least one side surface or both side surfaces of the porous substrate. In addition, the inorganic coating layer includes at least one of first and second polymer columns.

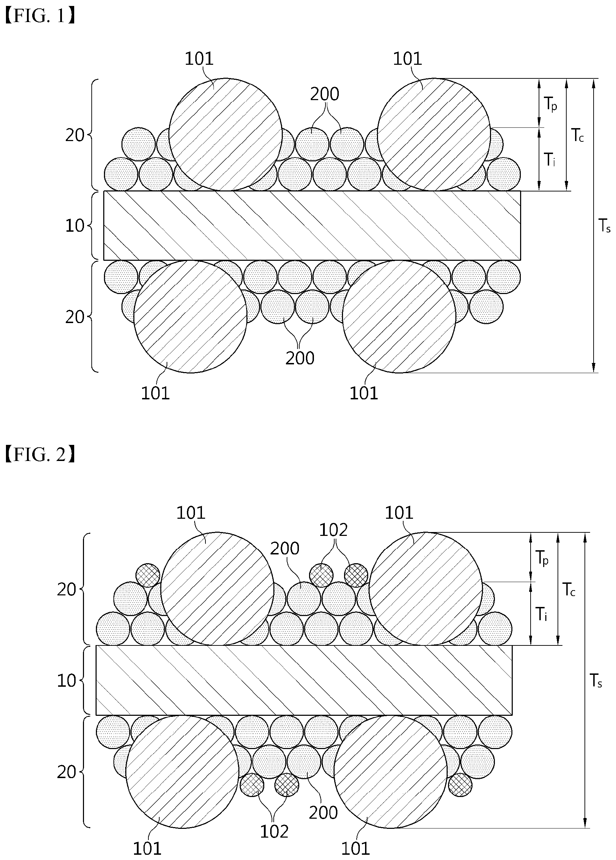

FIGS. 1 to 3 are diagrams each schematically illustrating a cross-section of the separator according to each embodiment of the present disclosure. In each embodiment, inorganic particles 200 and polymer columns are disposed in the inorganic coating layer. FIG. 1 illustrates a first embodiment of the present disclosure, and illustrates a form in which first polymer columns 100 are semi-buried in the inorganic coating layer.

FIG. 2 illustrates a second embodiment of the present disclosure. In FIG. 2, reference numeral 101 represents a first polymer column and reference numeral 102 represents a second polymer column, and the second embodiment further includes second polymer columns disposed on the surface of the inorganic coating layer together with the first polymer columns.

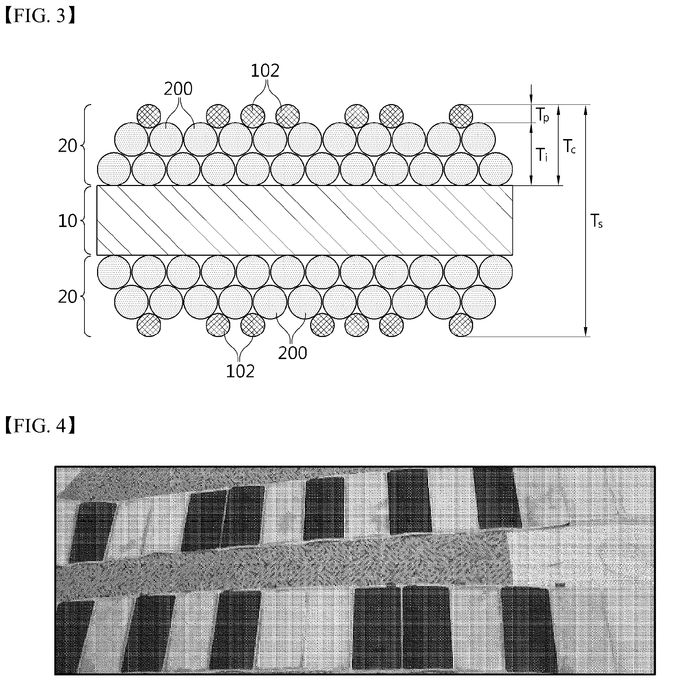

FIG. 3 illustrates a third embodiment of the present disclosure. According to FIG. 3, a plurality of second polymer particles are distributed on the surface of the inorganic coating layer, such that at least all or a portion of the surface of the inorganic coating layer is covered with the second polymer particles.

FIGS. 1 to 3 each particularly illustrate an embodiment before compression (pressing) during a manufacturing process of the separator. In the first and second embodiments including the first polymer columns, the first polymer columns protrude beyond the inorganic particle-filled portion. In addition, in the second and third embodiments including the second polymer columns, the second polymer columns maintain their circular shapes. The compression may refer to artificially applying an external force to the separator during a battery assembly process including a separator manufacturing process.

The separator may be subjected to surface treatment on the outermost surface thereof, for example, the surface of the inorganic coating layer, so that a polymer material on the separator surface is modified to have a polar functional group such as a carboxyl group, an aldehyde group or a hydroxyl group. Such surface modification enables chemical bonding such as hydrogen bonding with an electrode active material layer, thereby improving bonding strength with an electrode. The surface treatment may include at least one of corona discharge treatment and plasma discharge treatment. Preferably, the surface treatment may include corona discharge treatment. In addition, the surface treatment may be applied to at least one of the surface of the polymer column and the surface of the inorganic coating layer as described below. In addition, in one embodiment of the present disclosure, an area subjected to corona discharge treatment may be properly adjusted within a range of 50% to 100% relative to 100% of the area of the one side surface of the separator. The range is preferably 50% or greater, and for example, may be 50% or greater, 60% or greater, 70% or greater or 80% or greater.

The separator may have a total thickness of 5.0 µm to 30 µm, and the thickness may be properly adjusted in the above-mentioned range. For example, the total thickness may be 25.0 µm or less, 20.0 µm or less, 15.0 µm or less, 12.0 µm or less, or 10.0 µm or less. In one embodiment of the present disclosure, the separator preferably has a thickness of 15.0 µm or less, 14.0 µm or less, 13.0 µm or less, 12.0 µm or less, or 11.0 µm or less after being flattened by pressing described below. In addition, the separator may have porosity of about 25 vol% to 80 vol%. The porosity may be properly adjusted in the above-described range. For example, the porosity may be 30 vol% or greater, 35 vol% or greater, 40 vol% or greater, 50 vol% or greater, or 55 vol% or greater. Alternatively, the porosity may be 70 vol% or less, 65 vol% or less, 60 vol% or less, or 55 vol% or less. Meanwhile, the separator may have permeability in a range of about 50 sec/100 cc or greater and about 250 sec/100 cc or less. The permeability may be properly adjusted in the above-described range. For example, the permeability may be 60 sec/100 cc or greater, 70 sec/100 cc or greater, 100 sec/100 cc or greater, 120 sec/100 cc or greater, or 150 sec/100 cc or greater. Alternatively, the porosity may be 220 sec/100 cc or less, 200 sec/100 cc or less, or 180 sec/100 cc or less.

In one embodiment of the present disclosure, the thickness of the separator may be determined by cutting a cross-section of the separator specimen, observing the cross-section using an SEM, and taking the thickness at the thickest point as the thickness of the separator. Alternatively, thicknesses at two or more arbitrary points are measured, and an average value thereof may be taken as the thickness of the separator. When the thickness is measured at four or more points, the lowest and/or highest values may be excluded, and the average of the remaining values may be taken.

In one embodiment of the present disclosure, the porosity may be calculated by determining a density (apparent density) of an object to be measured such as the separator, and a net density of the object to be measured from a composition ratio of materials included in the object to be measured and density of each component, and then calculating a difference between the apparent density and the net density. For example, the porosity may be calculated by the following [Equation 3].
$Porosity \left(vol%\right) = \left\{1-\left(apparent density/net density\right)\right\} \times 100$

Meanwhile, the apparent density in the above Equation may be calculated from the following [Equation 3]. 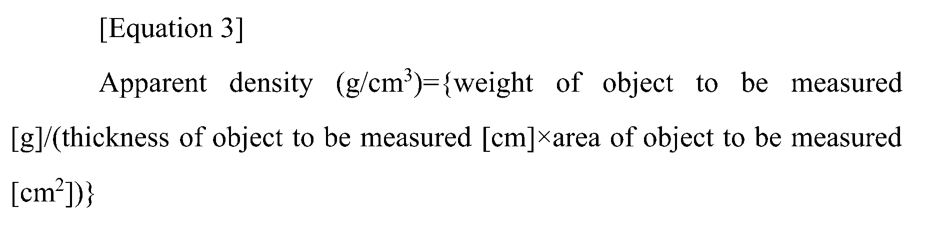 Apparent density (g/cm3)={weight of object to be measured [g]/(thickness of object to be measured [cm]×area of object to be measured [cm2])}

Alternatively, the porosity or pore size may be measured with an adsorption gas such as nitrogen using BELSORP (BET apparatus) by BEL JAPAN Co., Ltd., or may be measured using a method such as mercury intrusion porosimetry or capillary flow porometry.

The term 'permeability' used in the present specification refers to time required for 100 cc of air to pass through an object whose permeability is to be measured such as a separator and a porous substrate, may be expressed as a unit of second/100 cc, may be used interchangeably with transmittance, and may be commonly expressed as a Gurley value, or the like. In a specific embodiment of the present disclosure, the permeability may be measured in accordance with JIS P8117. In addition, air transmittance P1 measured for an object having a thickness of T1 may be converted into transmittance P2 corresponding to when the object has a thickness of 20 µm by an equation of P2=(P1×20)/T1.

### Porous Substrate

The porous substrate refers to, as a porous ion-conducting barrier that allows ions to pass therethrough while blocking an electrical contact between a negative electrode and a positive electrode, a substrate having multiple pores formed therein. The pores are interconnected to each other, allowing gas or liquid to pass from one side surface of the substrate to the other side surface.

As a material constituting such a porous substrate, either an organic material or an inorganic material having electrical insulation properties may be used. In particular, in terms of providing a shut-down function to the substrate, a thermoplastic resin is preferably used as the material constituting the substrate. Herein, the shut-down function refers to a function in which, when the temperature of a battery rises, the thermoplastic resin melts and closes the pores of the porous substrate to block ion migration, thereby preventing thermal runaway of the battery. As the thermoplastic resin, a thermoplastic resin having a melting point of lower than 200°C is suitable, and polyolefin is particularly preferred.

In addition, at least one of polymer resins such as polyethylene terephthalate, polybutylene terephthalate, polyacetal, polyamide, polycarbonate, polyimide, polyetheretherketone, polyethersulfone, polyphenylene oxide, polyphenylene sulfide or polyethylene naphthalene may be further included. The porous substrate may be a non-woven fabric, a porous polymer film, or a laminate of two or more thereof, but is not particularly limited thereto.

Specifically, the porous polymer substrate is any one of the following a) to e).
a) A porous film formed by melting/extruding a polymer resin,
b) a multilayer film formed by laminating two or more layers of the porous film of a),
c) a non-woven web prepared by laying filaments obtained by melting/spinning a polymer resin,
d) a multilayer film formed by laminating two or more layers of the non-woven web of b), and
e) a porous composite film having a multilayer structure including two or more of a) to d).

In the present disclosure, the porous substrate preferably has a thickness of 3 µm to 12 µm or 5 µm to 12 µm. When the thickness does not reach the above-mentioned value, the function of a conductive barrier is not sufficient, and when the thickness excessively exceeds the above-mentioned range (that is, too thick) on the contrary, resistance of the separator may increase excessively.

In one embodiment of the present disclosure, the polyolefin may have a weight average molecular weight (Mw) of 100,000 to 5,000,000. For example, the weight average molecular weight (Mw) may be 200,000 or greater, 500,000 or greater, 700,000 or greater, or 1,000,000 or greater. Alternatively, the weight average molecular weight (Mw) may be 4,000,000 or less, 3,000,000 or less, 2,500,000 or less, 2,000,000 or less, or 1,500,000 or less. As a unit of the weight average molecular weight (Mw), g/mol may be used. In one embodiment of the present disclosure, when the weight average molecular weight is less than 100,000, it may be difficult to secure sufficient mechanical properties. In addition, when the weight average molecular weight is greater than 5,000,000, shut-down properties may deteriorate, or molding may become difficult.

In one embodiment of the present disclosure, the molecular weight (weight average molecular weight/number average molecular weight) may be measured through a gel permeation chromatography (GPC) analysis. For example, PL GPC220 by Agilent Technologies may be used, and the measurement conditions may be as follows.
- Column (maker, model No.): 2xTSKgel SupermultiporeHZ-M+TSKgel SuperHZ-2500
- Eluent: THF
- Temperature: 40°C
- Flow rate: 1.0 mL/min
- Injection volume and sample concentration: 30 µl, and 1 mg/mL to 10 mg/mL
- Standard: Polystyrene
- Detector: RI

In addition, the porous substrate may have puncture strength of 300 gf or greater in terms of improving a manufacturing yield. The puncture strength of the porous substrate indicates a maximum puncture load (gf) measured by performing a puncture test using a Kato tech KES-G5 handy compression tester under conditions in which the curvature radius of the needle tip is 0.5 mm and the puncture speed is 2 mm/sec.

In a specific embodiment of the present disclosure, any planar porous polymer substrate used in electrochemical devices may be used as the porous polymer substrate, and for example, an insulating thin film having high ion transmittance and mechanical strength, a pore diameter of generally 10 nm to 200 nm, and a thickness of generally 2 µm to 12 µm may be used. Meanwhile, the porous substrate may have porosity of 30 vol% to 60 vol% and a pore size of 10 nm to 200 nm, however, the porosity and the pore size are not particularly limited thereto.

### Inorganic coating layer

In the present disclosure, the separator includes an inorganic coating layer formed on one side surface of the porous substrate. The inorganic coating layer includes a plurality of polymer columns, a plurality of inorganic particles, and a binder resin. In one embodiment of the present disclosure, the polymer column may include at least one of first and second polymer columns. In one embodiment of the present disclosure, the polymer column may include first and second polymer columns, and in this case, the first and second polymer columns may be adjusted to have a ratio (volume ratio) of about 20:1 to 5:5.

In the present specification, the first polymer column refers to a column semi-buried in the inorganic coating layer so that at least a portion of the surface thereof protrudes. The first polymer column may be added together to a dispersion slurry including inorganic particles and a binder resin when preparing the inorganic coating layer, and included in the inorganic coating layer in the manner of being semi-buried in the inorganic coating layer when forming the inorganic coating layer.

In the present specification, the second polymer column refers to a column disposed on the surface of the inorganic coating layer instead of being buried in the inorganic coating layer. The second polymer column may be disposed on the surface of the inorganic coating layer through a separate coating step after forming the inorganic coating layer.

In one embodiment of the present disclosure, the diameter D₅₀ of the second polymer column is preferably less than or equal to the diameter D₅₀ of the first polymer column.

In addition, in the present disclosure, the inorganic coating layer may be subjected to surface treatment on at least one or both surfaces of the surface as described above. The surface treatment on the surface of the inorganic coating layer may be applied to the surface of the inorganic particle-filled portion, the surface of the polymer column, or both.

In one embodiment of the present disclosure, when surface modification treatment is performed on the surface of the inorganic coating layer, the surface modification treatment method may a corona discharge treatment method and/or an atmospheric plasma treatment method. When performing corona discharge treatment, the discharge amount may be adjusted in a range of, for example, 10 Wmin/m² to 500 Wmin/m². In addition, the corona surface treatment may be performed at a rate adjusted in a range of 10 mpm to 500 mpm (meter per minute). In the atmospheric plasma treatment, the discharge amount and the rate may be properly adjusted in ranges of, for example, 10 Wmin/m² to 500 Wmin/m² and/or 10 mpm to 500 mpm (meter per minute), respectively.

In a specific embodiment of the present disclosure, in the inorganic coating layer, the inorganic particles may be included in an amount ranging from about 70 wt% to 90 wt% relative to 100 wt% of the inorganic coating layer. In addition, the polymer column may be included in an amount ranging from 10 parts by weight to 40 parts by weight and preferably 20 parts by weight to 35 parts by weight relative to 100 parts by weight of the inorganic particles. In one embodiment, the polymer column may be included in an amount ranging from 10 wt% to 30 wt% Ehsms 10 wt% to 20 wt% relative to 100 wt% of the inorganic coating layer. For example, the polymer column may be included in an amount ranging from 14 wt% to 18 wt%.

When the content of the polymer column is low in the inorganic coating layer, it is difficult to secure adhesion at a desired level, however, when the polymer column is included in an amount exceeding the above-mentioned range, the Gurley value and/or porosity of the separator may be reduced, which is not preferred.

Meanwhile, in a top-view image of the inorganic coating layer, the total area of the polymer columns may be 10% to 80% and preferably 10% to 50% relative to 100% of the total area of the inorganic coating layer before compression, after compression, or both before and after compression.

In the inorganic coating layer, two or more of the polymer columns may gather to form a cluster, or individual polymer columns may be spaced apart from each other by a predetermined interval. In one embodiment of the present disclosure, two or more of the polymer columns gathering to form a cluster may account for 30 vol% or less, preferably 20 vol% or less and more preferably 10 vol% or less relative to 100 vol% of the total polymer columns. Excessive clustering of the polymer columns may cause non-uniformity in resistance in the separator. Accordingly, the polymer columns forming a cluster are preferably 10 vol% or less relative to 100 vol% of the total polymer columns in terms of increasing uniformity in resistance. In one embodiment of the present disclosure, the polymer columns are preferably spaced apart from other polymer columns in a predetermined distance without direct contact and distributed in a sea-island pattern in the inorganic coating layer.

In a state in which the separator is not artificially pressed after manufacturing, a plurality of the polymer columns may be each independently buried in the inorganic coating layer, such that they are exposed or protrude beyond the surface of the inorganic coating layer. The exposure includes the polymer columns being disposed on the surface. Some of the polymer columns may have a protruding height (Tₚ) of greater than 1 µm. For example, Tₚ may be greater than 1 µm and 10 µm or less, and for example, 7 µm or less, 5 µm or less, or 3 µm or less. In addition, some of the polymer columns exposed on the inorganic coating layer surface or protruding therefrom may be in contact with the porous substrate. In addition, a portion of the exposed or protruding polymer column may be in contact with the porous substrate. Herein, the polymer column protruding (being exposed) beyond the surface of the inorganic coating layer means that the height of the polymer column is greater than the height of the inorganic particle-filled portion in the inorganic coating layer, resulting in a height greater than that of the inorganic particle-filled portion.

In one embodiment of the present disclosure, the inorganic coating layer may have an average pore size of 20 nm to 1,000 nm. In one embodiment of the present disclosure, the pore size may be measured for the inorganic particle-filled portion. In the above-mentioned range, the inorganic coating layer may have an average pore size of 800 nm or less, or 500 nm or less, and, independently therefrom or together therewith, 20 nm or greater, 50 nm or greater, or 100 nm or greater. For example, the inorganic coating layer has an average pore size of 20 nm to 800 nm. The pore size may be calculated from a shape analysis using SEM images. When the pore size is less than the above-mentioned range, the pores are likely to be blocked due to the expansion of a binder resin in the coating layer, and when the pore size is out of the above-mentioned range, there are problems in that functioning as an insulating layer is difficult, and self-discharge properties deteriorate after manufacturing a secondary battery.

In one embodiment of the present disclosure, the inorganic coating layer preferably has porosity (porosity in a state including the polymer column) of 30 vol% to 80 vol%. The porosity may be properly adjusted in the above-mentioned range. For example, the porosity may be 35 vol% or greater, 40 vol% or greater, or 45 vol% or greater. Alternatively, the porosity may be 75 vol% or less, 70 vol% or less, or 65 vol% or less. Having porosity of 30% or greater is advantageous in terms of lithium ion permeability, and when the porosity is 80% or less, the surface opening ratio is not too high, which is suitable for securing adhesion between the separator and an electrode.

Meanwhile, in one embodiment of the present disclosure, introducing the polymer column having the following properties allows an electrode and the separator to be in close contact with each other, thereby minimizing the gap, and therefore, the separator may exhibit ion conductivity of 9.00×10⁻⁴ S/cm or greater.

### Polymer Column

The polymer column may include a polymer resin in an amount of 90 wt% or greater, 95 wt% or greater, or 99 wt% or greater relative to 100 wt% of the polymer column. Preferably, the polymer column may be formed of a polymer resin. In addition, the polymer column has adhesive properties, and may adhere to battery materials adjacent to the polymer column, such as inorganic particles or the porous substrate.

In the present disclosure, the polymer column may not have open cell-type pores in the body. It is preferred that the polymer column does not have open cell-type pores, so that a fluid such as gas or liquid does not flow through the polymer column body.

As described above, the polymer column may include at least one of a first polymer column and a second polymer column. At least a portion of one or more of the first polymer columns is exposed or protrude beyond the surface of the inorganic coating layer, while another portion thereof may be in contact with the surface of the porous substrate. In addition, the second polymer column is disposed on the surface of the inorganic coating layer, and may have a smaller diameter D₅₀ compared to the diameter D₅₀ of the first polymer column.

In addition, in the present disclosure, the polymer column may be subjected to surface treatment on at least one or both surfaces of the surface as described above. In one embodiment of the present disclosure, when corona discharge treatment is performed on the surface of the polymer column, the discharge amount may be adjusted in a range of, for example, 10 Wmin/m² to 500 Wmin/m². In addition, the corona surface treatment may be performed at a rate adjusted in a range of 10 mpm to 500 mpm (meter per minute). In the atmospheric plasma treatment, the discharge amount and the rate may be properly adjusted in ranges of, for example, 10 Wmin/m² to 500 Wmin/m² and/or 10 mpm to 500 mpm (meter per minute), respectively.

In one embodiment of the present disclosure, the diameter D₁₀ of the first polymer column may be 30% or greater of the diameter D₅₀ thereof, and the diameter D₉₀ of the first polymer column may be 200% or less of the diameter D₅₀ thereof. Together therewith or independently therefrom, the D₅₀ of the first polymer column may be at least equal to, preferably at least 2.0 times and more preferably at least 3.5 times the D₅₀ of the inorganic particles. Together therewith or independently therefrom, the D₅₀ of the first polymer column may be at most 20 times, at most 15 times, or at most 10 times the D₅₀ of the inorganic particles. Together therewith or independently therefrom, the D₅₀ of the first polymer column may be at most 20 times, at most 15 times, or at most 10 times the D₅₀ of the inorganic particles.

Meanwhile, the diameter D₁₀ of the second polymer column may be 30% or greater of the diameter D₅₀ thereof, and the diameter D₉₀ of the second polymer column may be 200% or less of the diameter D₅₀ thereof. The second polymer column is introduced to the separator in the manner of coating the surface of the inorganic coating layer after forming the inorganic coating layer, and therefore, the diameter of the second polymer column is preferably larger than the pore size of the inorganic coating layer. In this regard, the D₅₀ of the second polymer column may be properly adjusted in a range of 0.1 times to 5 times relative to the D₅₀ of the inorganic particles. For example, the D₅₀ of the second polymer column may be at least 0.3 times, at least 0.5 times, at least 0.7 times, or at least 0.8 times the D₅₀ of the inorganic particles. In addition, the D₅₀ of the second polymer column may be at most 3 times, at most 2 times, or at most equal to the D₅₀ of the inorganic particles.

In one embodiment of the present disclosure, the first polymer column may have a diameter D₅₀ of about 2.0 µm to 7.0 µm, and the diameter D₅₀ may be properly adjusted in the above-mentioned range. For example, the first polymer column may have a D₅₀ in a range of 4.0 µm to 6.0 µm or 3.0 µm to 5.0 µm.

The diameter D₅₀ of the second polymer column may be smaller than the diameter D₅₀ of the first polymer column, and for example, the second polymer column may have a diameter D₅₀ of about 0.1 µm to 1.5 µm, 0.1 µm to 1.0 µm, or 0.1 µm to 0.7 µm.

The diameters D₅₀ of the first and second polymer columns, and the like, reflect the state before pressing the separator, and preferably before slurry preparation.

Meanwhile, together therewith, the first polymer column preferably has a D₁₀₀ of 20 µm or less. When the D₁₀₀ of the first polymer column excessively exceeds the above-mentioned range, the first polymer column has low size uniformity, resulting in a non-uniform thickness of the separator coating layer, and when excessively large polymer columns are compressed, the surface of the separator in the corresponding portions is covered by the compressed polymer columns, resulting in reduced porosity and degraded porosity uniformity.

In one embodiment of the present disclosure, one or more of the first polymer columns may be higher than the inorganic particle-filled portion when the separator is not artificially pressed after manufacturing. In other words, the first polymer columns may protrude from the surface of the inorganic particle-filled portion. In one embodiment of the present disclosure, when the polymer columns protrude beyond the inorganic coating layer, the thickness of the inorganic particle-filled portion may be 85% or less of the D₅₀ of the first polymer column. Such a description may also be applied to the first polymer column.

Meanwhile, in one embodiment of the present disclosure, the height (T_{c}) of the polymer column may be determined by cutting a cross-section of the separator specimen, observing the cross-section by an SEM, and then taking the value of the highest portion of the polymer column.

Meanwhile, in one embodiment of the present disclosure, the protruding height (Tₚ) of the polymer column may be determined by cutting a cross-section of the separator specimen, observing the cross-section by an SEM, and then taking the value of the portion where the gap between the inorganic particle-filled portion and the polymer column is greatest.

Meanwhile, in one embodiment of the present disclosure, one or more of the polymer columns may be flattened by the protruding portions being pressed when applying a pressure of 0.5 MPa or greater and 20.0 MPa or less, for example, a pressure of 2.0 MPa to 8.0 MPa, and the thickness of the inorganic coating layer may be uniform. Meanwhile, the pressing may be hot pressing. Such properties are advantageous for strengthening adhesion between an electrode and the separator during electrode assembly manufacturing and for ensuring a close contact between the electrode and the separator, thereby preventing separation. In other words, the polymer column may exhibit softened properties under conditions for laminating the electrode and the separator, that is, a hot press condition.

When the separator according to the present disclosure is compressed under pressing conditions of 2.0 MPa to 7.0 MPa and 55°C to 65°C, the inorganic coating layer has a height (T_{coating layer}) of less than 1.1xTᵢ. In addition, after compression under the above-mentioned conditions, the polymer column may have a protruding height (Tₚ) of 1 µm or less or less than 1 µm, resulting in flattening of the separator. Referring to FIGS. 1, 2 and 3, in the present disclosure, the T_{c} refers to an overall height of the inorganic coating layer (single side), and is based on the highest portion of the inorganic coating layer from the porous substrate. In the present disclosure, the T_{c} may be equal to the height of the polymer column that protrudes the most. In addition, the Tₚ is based on the highest portion of the inorganic coating layer from the inorganic particle-filled portion. Meanwhile, when the second polymer columns are distributed together in the inorganic coating layer, the T_{c} is based on the greater one of the protruding height of the first polymer column and the height of the second polymer column. In addition, when the inorganic coating layer includes only the second polymer columns without the first polymer columns, the T_{c} refers to the height of the second polymer column.

Meanwhile, in the present disclosure, the pressing may be performed in a range of several seconds (sec) to several minutes (min). For example, the pressing may be performed within 60 seconds or 30 seconds. Since the separator according to the present disclosure may be flattened in a short period of time, process efficiency may be improved.

The above-mentioned compression conditions are generally based on lamination process conditions of an electrode and a separator for manufacturing an electrode assembly. Such properties are advantageous for strengthening adhesion between the electrode and the separator during battery manufacturing and for ensuring a close contact between the electrode and the separator, thereby preventing separation.

In the present specification, the term flattening means that, by the above-described pressing conditions, the thickness of the inorganic particle-filled portion and the height of the polymer column are the same, or a height difference between the inorganic particle-filled portion and the polymer column is 1 µm or less or less than 1 µm, preferably less than 0.5 µm and more preferably less than 0.3 µm. In one embodiment of the present disclosure, the height of the polymer column may be based on the polymer column having the greatest height among the polymer columns.

In other words, when the separator according to the present disclosure is applied to battery manufacturing, it is preferred that the thickness of the inorganic particle-filled portion is smaller than the D₅₀ of the polymer column after laminating the electrode and the separator.

Meanwhile, the flattened polymer column may have a larger area observed in a plan view compared to before pressing. Herein, the major-axis length of the polymer column observed in a plan view after flattening is preferably 10 times or less the D₅₀ of the polymer column before flattening.

In the present disclosure, the polymer column may have a phase angle of less than 10°. The phase angle may be controlled to less than 3° and preferably less than 1.5° in order to improve separator rigidity and ensure bonding strength. For example, the phase angle may be controlled to greater than 0°and less than 1°. The phase angle may be determined at room temperature (about 18°C to 25°C). The phase angle may be calculated according to the following Equation 1.

$Phase angle \left(δ\right) = {tan}^{- 1} \left(G"/G′\right)$

In Equation 1, G' is a storage modulus and G" is a loss modulus.

The phase angle, the storage modulus and the loss modulus may be calculated based on dynamic mechanical analysis (DMA) data. DMA is a method of analyzing elastic and viscous properties of a material by applying a periodic stress or strain (strain mainly in a sinusoidal form) to the material and measuring a response of the material. The amplitude of the strain is the maximum magnitude of the strain applied to the material, and may generally be obtained by measuring a displacement (physical travel distance) applied to the material. G' represents an ability of the material to store energy, corresponding to the component in which there is no phase angle between strain and stress, and may be calculated from σ₀xcos(δ)/ε₀. Herein, σ₀ is the amplitude of stress, ε₀ is the amplitude of strain, and δ is the phase angle. In addition, G" represents an ability of the material to dissipate energy, corresponding to the component in which there is a phase angle between strain and stress, and may be calculated from σ₀xsin(δ)/ε₀.

In a specific embodiment, the phase angle may be measured using a rheological property analyzer (ARES-G2, TA Instrument). The polymer column may be subjected to a frequency sweep test under a temperature condition of -60°C to 80°C (rate of 1°C/min to 10°C/min) to measure a storage modulus (G') at a frequency of 1 rad/s, a loss modulus (G") at 1 rad/s and a storage modulus (G') in a frequency range of 10⁻¹ rad/s to 1 rad/s, and the phase angle may be calculated through Equation 1. The strain may be set within a range of 0.1% to 1.0%.

In addition, in the present disclosure, the polymer column preferably has a storage modulus (G') of 100 Pa or greater and 3,500 Pa or less at room temperature from the perspective of flattening by pressing. The storage modulus (G') may be more preferably 500 Pa to 3,500 Pa. Preferably, the storage modulus (G') may pertain to the material constituting the polymer column. When the storage modulus at room temperature is in the above-mentioned range, adhesion may be readily achieved through an anchoring effect resulting from polymer column deformation and pores on the electrode surface due to the low modulus when pressing an electrode/separator laminate, and bonding strength may be maintained due to the high modulus after removing the pressure. In one embodiment of the present disclosure, the room temperature may be in a range of 20°C to 25°C. In addition, in one embodiment, the polymer column may have a storage modulus in a range of 0.05 Pa to 10 Pa at a high temperature (60°C). The storage modulus at a high temperature may be more preferably 0.05 Pa to 5 Pa. Meanwhile, considering the temperature applying conditions in an actual battery assembly process, the polymer column may have a ratio of the storage modulus (G') at 60°C to the storage modulus (G') at room temperature (G' (60°C)/G' (room temperature)) of 0.1 or less.

Together therewith or independently therefrom, the polymer column may have at least one tan δ peak in a range of 45°C to 80°C when measured using a dynamic mechanical analyzer (DMA, ARES-G2, TA Instrument). The tan δ peak appearing at a temperature of lower than 45°C is not preferred since adhesive properties between the wound separators may be exhibited, and when the temperature is higher than 80°C, a sudden drop in the storage modulus is not observed even when applying a temperature, making it difficult to flatten the polymer column during high-temperature pressing fixation.

In one embodiment of the present disclosure, the storage modulus may be measured using a rheological property analyzer (dynamic mechanical analyzer (DMA), ARES-G2, TA Instrument). In a specific embodiment, the storage modulus may be determined by conducting a temperature sweep test under a temperature condition of -60°C to 80°C and a frequency of 1.0 rad/s.

In one embodiment of the present disclosure, the polymer column, having the above-described properties, preferably includes a material that is non-reactive in a lithium secondary battery and may provide bonding strength between the separator and an electrode. The polymer column may include the acrylic polymer in an amount of, for example, 10 wt% or greater, 30 wt% or greater, 50 wt% or greater, 70 wt% or greater or 90 wt% or greater relative to 100 wt% of the polymer column. In one embodiment of the present disclosure, the polymer column may include an acrylic polymer. For example, the acrylic material may include at least one repeating unit among an acrylate-based acrylate, methyl acrylate, ethyl acrylate, n-propyl acrylate, isopropyl acrylate, n-butyl acrylate, t-butyl acrylate, pentyl acrylate, hexyl acrylate, heptyl acrylate, octyl acrylate, 2-ethylhexyl acrylate, nonyl acrylate, decyl acrylate, lauryl acrylate, n-tetradecyl acrylate, stearyl acrylate, methyl methacrylate, ethyl methacrylate, n-propyl methacrylate, isopropyl methacrylate, n-butyl methacrylate, t-butyl methacrylate, pentyl methacrylate, hexyl methacrylate, heptyl methacrylate, octyl methacrylate, 2-ethylhexyl methacrylate, nonyl methacrylate, decyl methacrylate, lauryl methacrylate, n-tetradecyl methacrylate, and stearyl methacrylate. However, the acrylic polymer is not limited thereto. Meanwhile, in a specific embodiment, at least one hydrogen in the unit may be substituted with another substituent. In one embodiment of the present disclosure, the acrylic polymer may include the above-described repeating unit in an amount of 30 wt% or greater, 50 wt% or greater, 70 wt% or greater or 90 wt% or greater relative to 100 wt% of the acrylic polymer.

Meanwhile, in one embodiment of the present disclosure, the acrylic polymer may have a weight average molecular weight of about 20,000 to 800,000.

However, after injecting a liquid electrolyte, the polymer column may dissolve and lose adhesion, or viscosity of the liquid electrolyte increases by the dissolved components, causing a risk of increasing resistance of a lithium secondary battery, and therefore, it is preferable to have proper solubility as below. For example, solubility in an organic solvent or electrolyte may be reduced through crosslinking the surface of the material constituting the polymer column. In a specific embodiment, the polymer column may have a degree of crosslinking (gel fraction) of 55% or greater, preferably 65% or greater, and more preferably 75% or greater. The degree of crosslinking may be expressed as a percentage (%) of the dissolved amount after dissolving the polymer columns in THF (tetrahydrofuran) for 1 hour to 48 hours relative to the initial volume or mass of the polymer columns.

In one embodiment of the present disclosure, at least one of the polymer columns has a cross-sectional area (a) of the polymer column observed in a cross-section at the lower 5% from a lowermost portion of the inorganic coating layer toward the surface portion, and a cross-sectional area of the polymer column observed in a cross-section at the upper 5% from an uppermost portion of the inorganic coating layer toward the lower portion, and the area (b) may be larger than the area (a). Such characteristics of the polymer column may correspond to cases where the polymer column protrudes from the inorganic coating layer surface and/or is flattened by pressing. Preferably, the characteristics may be confirmed in the form of the polymer column after the protrusion and the subsequent flattening.

Together therewith or independently therefrom, at least one of the polymer columns may have, in a cross-section of the polymer column observed in a vertical cross-section of the inorganic coating layer, a diameter (a) of a lower portion of the polymer column that is smaller than a diameter (b) of an upper portion of the polymer column. In one embodiment, the ratio of the upper portion diameter (b) to the lower portion diameter (a) may be greater than 1 and 20 or less, 1.2 to 20, 1.5 to 20, or 2 to 20. Such characteristics of the polymer column may correspond to cases where the polymer column protrudes from the inorganic coating layer surface and/or is flattened by pressing. Preferably, the characteristics may be confirmed in the form of the polymer column after the flattening. In one embodiment of the present disclosure, the diameter of the upper portion refers to a diameter measured at an upper 5% point from the uppermost portion of the polymer column toward the lower portion, and the diameter of the lower portion refers to a diameter measured at a lower 5% point from the lowermost portion of the polymer column toward the upper portion.

In one embodiment of the present disclosure, the height of the polymer column, the diameter length of the polymer column and/or the cross-sectional size thereof may be calculated from SEM images of horizontal or vertical cross-section of the separator. FIG. 2 shows an SEM image of the surface of the separator of Example 1 of the present disclosure, in which dimensions of individual components may be identified. As another method of using SEM images, the SEM images are classified into grey levels, and an area corresponding to a specific grey level corresponding to the polymer column may be measured. The grey level refers to a shading value for a number of pixels included in the SEM image. For example, in a SEM image having 256 grey levels having 0 to 255 levels, the shading value may range from 0 to 255. In a specific embodiment of the present disclosure, the polymer column may have grey levels in a range of 10 to 50, and the inorganic particles may have grey levels in a range of 160 to 220. Accordingly, in an SEM image of an arbitrary cross-section of the separator, the regions of the polymer column may be set and defined from pixels having gray levels of 10 to 50, and length and area thereof may be calculated. In the present disclosure, the cross-sectional SEM image of the electrode may be obtained by performing an energy dispersive X-ray spectroscopy (EDS) mapping of the components on the cross-section of the electrode obtained by argon (Ar) ion milling using an EDS detector of a scanning electron microscope (SEM) device, followed by image processing.

In another specific embodiment of the present disclosure, the diameter or area of the polymer column may be calculated by three-dimensionally modeling the separator and/or the inorganic coating layer, and then obtaining an arbitrary cross-section therefrom.

### Inorganic Particle-Filled Portion

In the inorganic coating layer of the separator, spaces between the polymer columns may be filled with a mixture including inorganic particles and a binder resin. In the present specification, the portion filled with a mixture including inorganic particles and a binder resin is referred to as an 'inorganic particle-filled portion'. The inorganic particle-filled portion may further include a binder resin to secure bonding strength between the inorganic particles, and between the inorganic particles and the porous substrate. The inorganic particle-filled portion has pore(s) resulting from an interstitial volume, a space formed between adjacent inorganic particles. The inorganic coating layer may have a porous structure with predetermined porosity by the pores, allowing gas or liquid to pass from one side surface to the other side surface. The inorganic particles and the polymer columns may be bonded to each other due to adhesive properties, or may be bonded via the binder resin.

In one embodiment of the present disclosure, the thickness (Tᵢ) of the inorganic particle-filled portion may be 5% to 40% of the D₅₀ of the polymer column before flattening the separator. In a specific embodiment, Tᵢ may be 0.5 µm to 5 µm, and may be properly adjusted in the above-mentioned range. Tᵢ may be, for example, 4 µm or less, 3 µm or less or 2 µm or less, and preferably 1.5 µm or less or 1.0 µm or less. When the Tᵢ is in the above-mentioned numerical range, adhesion to an electrode is advantageous in terms of battery cycle properties and resistance properties. In addition, when applied to a battery, energy density of the battery may be improved since the thickness of the separator is reduced. When the inorganic coating layer is disposed on both surfaces of the porous substrate, the thickness of the inorganic particle-filled portion refers to a value measured for the inorganic coating layer disposed on any one surface.

In one embodiment of the present disclosure, the height (thickness, Tᵢ) of the inorganic particle-filled portion (single side) may be determined by cutting a cross-section of the separator specimen, observing the cross-section by an SEM, then measuring thicknesses at arbitrary two or more points in a region where the polymer column is not located, and taking an average value thereof as the height. When the thickness is measured at four or more points, the lowest and/or highest values may be excluded, and the average of the remaining values may be taken. In the thickness of the inorganic particle-filled portion, the lowest point is employed as the surface of the porous substrate.

Meanwhile, in one embodiment of the present disclosure, the height of the inorganic particle-filled portion may tend to increase as the inorganic particle-filled portion approaches the polymer column. The tendency may be more pronounced with respect to the peripheral region of the polymer column. In other words, outside the peripheral region, the height of the inorganic particle-filled portion may gradually increase toward the polymer column from an arbitrary point of the inorganic particle-filled portion, and the height may increase relatively steeply toward the polymer column from a boundary of the peripheral region. In one embodiment of the present disclosure, the peripheral region may refer to a portion having a width of about 2 µm from the boundary between the inorganic particle-filled portion and the polymer column toward the inorganic particle-filled portion.

### Inorganic Particles

In a specific embodiment of the present disclosure, the inorganic particles are not particularly limited as long as they are electrochemically stable. In other words, the inorganic particles that may be used in the present disclosure are not particularly limited as long as they do not undergo oxidation and/or reduction reaction in an operating voltage range (for example, 0 V to 5 V based on Li/Li+) of an electrochemical device in which they are used. In particular, using inorganic particles with a high dielectric constant as the inorganic particles contributes to an increase in the degree of dissociation of an electrolyte salt in a liquid electrolyte, such as a lithium salt, thereby improving ion conductivity of the electrolyte liquid.

For the reasons described above, the inorganic particles preferably include high-dielectric inorganic particles having a dielectric constant of 5 or greater and preferably 10 or greater. Nonlimiting examples of the inorganic particles having a dielectric constant of 5 or greater include BaTiO₃, Pb(Zr,Ti)O₃ (PZT), b₁₋ₓLaₓZr_{1-y}Ti_{y}O₃ (PLZT, 0<x<1, 0<y<1), Pb(Mg_{1/3}Nb_{2/3})O₃-PbTiO₃ (PMN-PT), hafnia (HfO₂), SrTiO₃, SnO₂, CeO₂, MgO, NiO, CaO, ZnO, ZrO₂, SiO₂, Y₂O₃, Al₂O₃, SiC, TiO₂ or mixtures thereof.

In addition, as the inorganic particles, inorganic particles having a lithium ion transfer ability, that is, inorganic particles that contain a lithium element but do not store lithium and instead have a function to transport lithium ions may be used. Nonlimiting examples of the inorganic particles having a lithium ion transfer ability include (LiAlTiP)ₓO_{y}-based glass (0<x<4, 0<y<13) such as lithium phosphate (Li₃PO₄), lithium titanium phosphate (LixTiy(PO₄)₃, 0<x<2, 0<y<3), lithium aluminum titanium phosphate (LiₓAl_{y}Ti_{z}(PO₄)₃, 0<x<2, 0<y<1, 0<z<3) or 14Li₂O-9Al₂O₃-38TiO₂-39P₂O₅, lithium germanium thiophosphate (LiₓGe_{y}P_{z}S_{w}, 0<x<4, 0< y<1, 0<z<1, 0<w<5) such as lithium lanthanum titanate (LiₓLa_{y}TiO₃, 0<x<2, 0<y<3) or Li_{3.25}Ge_{0.25}P_{0.75}S₄, lithium nitride (LiₓN_{y}, 0<x<4, 0<y<2) such as Li₃N, SiS₂-based glass (LiₓSi_{y}S_{z}, 0<x<3, 0<y<2, 0<z<4) such as Li₃PO₄-Li₂S-SiS₂, P₂S₅-based glass (LiₓP_{y}S_{z}, 0<x<3, 0< y<3, 0<z<7) such as LiI-Li₂S-P₂S₅, or mixtures thereof.

In addition, the particle diameter (based on longest diameter) of the inorganic particles is not particularly limited, but may be in a range of 0.1 µm to 2.0 µm to form a coating layer with uniform thickness and for proper porosity. For example, the particle diameter may be 0.1 µm to 1.5 µm, or 100 nm to 800 nm. When the particle diameter of the inorganic particles is less than 0.1 µm, dispersibility may be reduced, and when the particle diameter is greater than 2.0 µm, the thickness of the formed coating layer may increase. Meanwhile, in one embodiment of the present disclosure, the D₅₀ particle diameter of the inorganic particles may be 100 nm to 800 nm, and more specifically 500 nm to 800 nm. Meanwhile, in one embodiment of the present disclosure, the inorganic particles may be included in an amount of about 50 wt% to 90 wt% in the inorganic coating layer.

According to a non-limiting embodiment of the present disclosure, the diameters (D₅₀) of the inorganic particles may be properly adjusted in a range of 0.1 µm to 1.5 µm, and for example, may be in a range of 200 nm to 1 µm.

### Binder Resin

Meanwhile, in one embodiment of the present disclosure, the inorganic coating layer may include a binder resin to ensure bonding strength between the inorganic particles, and between the inorganic particles and the porous substrate. In the inorganic particle-filled portion, the binder resin may be included in an amount of 0.1 parts by weight to 30 parts by weight, 0.1 parts by weight to 20 parts by weight, 0.1 parts by weight to 10 parts by weight, or 0.1 parts by weight to 5 parts by weight relative to 100 parts by weight of the inorganic particles.

Meanwhile, in a specific embodiment of the present disclosure, nonlimiting examples of the binder resin may include a (meth)acrylic polymer, a vinylidene fluoride-based polymer, polyvinyl alcohol, polyacrylonitrile, polyvinyl pyrrolidone, polyvinyl acetate, polyethylene-co-vinyl acetate, polyethylene oxide, polyarylate, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, carboxymethyl cellulose, hydroxyalkyl methyl cellulose, hydroxyethyl cellulose, hydroxypropyl cellulose, ethyl hydroxyethyl cellulose, methyl cellulose and the like, and these may be used either alone, or as a mixture of two or more thereof.

The (meth)acrylic polymer may include at least one of (meth)acrylic acid ester, butyl (meth)acrylate, 2-ethylhexyl (meth)acrylate, ethyl (meth)acrylate, methyl (meth)acrylate, n-propyl (meth)acrylate, isopropyl (meth)acrylate, butyl acrylate, t-butyl (meth)acrylate, pentyl (meth)acrylate, n-oxyl (meth)acrylate, isooctyl (meth)acrylate, isononyl (meth)acrylate, lauryl (meth)acrylate and tetradecyl(meth)acrylate as a monomer, however, the (meth)acrylic polymer is not limited thereto.

The vinylidene fluoride-based polymer may include at least one of a homopolymer of vinylidene fluoride (polyvinylidene fluoride), a copolymer of vinylidene fluoride and a monomer copolymerizable therewith, and mixtures thereof. In one embodiment of the present disclosure, as an example of the monomer, a fluorinated monomer, a chlorine-based monomer and/or the like may be used. Nonlimiting examples of the fluorinated monomer may include vinyl fluoride; trifluoroethylene (TrFE); chlorofluoroethylene (CTFE); 1,2-difluoroethylene; tetrafluoroethylene (TFE); hexafluoropropylene (HFP); perfluoro(alkyl vinyl)ether such as perfluoro(methyl vinyl)ether (PMVE), perfluoro(ethyl vinyl)ether (PEVE) and perfluoro(propylvinyl)ether (PPVE); perfluoro(1,3-dioxol); perfluoro(2,2-dimethyl-1,3-dioxol) (PDD) and the like, and one or more thereof may be included. For example, it may be polyvinylidene fluoride-co-hexafluoropropylene or polyvinylidene fluoride-co-trichloroethylene.

In addition, in one embodiment of the present disclosure, the inorganic coating layer may further include an additive such as a dispersant and/or a thickener in an amount ranging from 0.5 parts by weight to 3.0 parts by weight relative to 100 parts by weight of the inorganic particles. When there are materials capable of improving dispersibility and/or viscosity among the examples of the binder resin described above, they may be used as additives for such purposes.

### Method for Manufacturing Separator

Next, a method for manufacturing the separator of the present disclosure will be described. However, the following description relates to one embodiment to manufacture the present disclosure, and the method is not particularly limited thereto.

Specifically, inorganic particles are introduced first to a proper solvent to prepare a mixture. After that, polymer particles for a first polymer column are introduced to the mixture to prepare a slurry for an inorganic coating layer. Then, the slurry is applied on the porous substrate, and dried. Meanwhile, in one embodiment of the present disclosure, the polymer particles for a first polymer column may be subjected to surface treatment, the treatment including corona discharge treatment and/or plasma discharge treatment, on at least all or a portion of the surface before being introduced for separator manufacturing. In one embodiment of the present disclosure, when corona discharge treatment is performed on the surface of the polymer column, the discharge amount may be adjusted in a range of, for example, 10 Wmin/m² to 500 Wmin/m². In addition, the corona surface treatment may be performed at a rate adjusted in a range of 10 mpm to 500 mpm (meter per minute). Together with or independently from the corona discharge treatment, the atmospheric plasma treatment may also be performed under the same discharge amount and surface treatment rate conditions.

In one embodiment of the present disclosure, when the inorganic coating layer further includes a binder resin, a polymer solution is prepared by dissolving the binder resin in a solvent, and then the inorganic particles and the polymer particles for a first polymer column may be sequentially or simultaneously introduced to the polymer solution to prepare a slurry for an inorganic coating layer. The binder resin is preferably a water-soluble binder resin.

After that, the obtained separator is dried to integrally form the inorganic coating layer on the porous substrate. Herein, in order to prevent deformation of the polymer column, the drying temperature of the separator is preferably set to a temperature that is 20°C or less above the glass transition temperature of the polymer column material.

When preparing the slurry, water or an aqueous solvent including water may be used as the solvent. In addition, when there are limits in the drying speed and the temperature, methanol, ethanol, isopropyl alcohol or the like having a lower boiling point than water may be used as a co-solvent.

The slurry may be applied using an existing coating method such as a Mayer bar, a die coater, a reverse roll coater or a gravure coater.

Next, surface treatment, which includes corona discharge treatment and/or plasma discharge treatment, may be performed on at least all or a portion of the surface of the inorganic coating layer. When a polymer column that is not subjected to corona discharge treatment is used, corona discharge treatment may be performed after forming the inorganic coating layer. In one embodiment of the present disclosure, when corona discharge treatment is performed on the surface of the inorganic coating layer, the discharge amount may be adjusted in a range of, for example, 10 Wmin/m² to 500 Wmin/m². In addition, the corona surface treatment may be performed at a rate adjusted in a range of 10 mpm to 500 mpm (meter per minute). Together with or independently from the corona discharge treatment, the atmospheric plasma treatment may also be performed under the same discharge amount and surface treatment rate conditions.

Meanwhile, in one embodiment of the present disclosure, when the inorganic coating layer further includes a second polymer column, a dispersion solution of the second polymer column may be prepared, and coated on the surface of the inorganic coating layer to manufacture the separator. Specifically, the second polymer column is first introduced to a proper solvent to prepare a dispersion composition. After that, the dispersion composition is applied on the surface of the previously formed inorganic coating layer, and dried. In this case, corona discharge treatment may be performed before and/or after coating the second polymer column. In another embodiment, the second polymer column may be subjected to surface treatment in advance before being introduced into the composition.

In addition, alternatively, when the inorganic coating layer includes only a second polymer column without including a first polymer column, the inorganic coating layer may be formed as follows. First, inorganic particles and a binder resin are introduced to a proper solvent to prepare a dispersion composition. Then, the dispersion composition is applied on the porous substrate, and dried. After that, the second polymer column is first introduced to a proper solvent to prepare a dispersion composition, and the dispersion composition is applied on the surface of the previously formed inorganic coating layer, and dried. After that, surface treatment may be performed on the outermost surface of the formed separator. In another embodiment, the second polymer column may be subjected to surface treatment in advance before being introduced into the composition.

Meanwhile, in addition to the manufacturing method described above, any manufacturing method capable of achieving the separator structure described above may be applied without limit.

Meanwhile, the present disclosure provides a secondary battery including the separator. The battery includes: a negative electrode; a positive electrode; and a separator interposed between the negative electrode and the positive electrode, and the separator is a separator provided with the characteristics described above.

In the present disclosure, the positive electrode is provided with a positive electrode current collector, and a positive electrode active material layer including a positive electrode active material, a conductor and a binder resin on at least one side surface of the current collector. The positive electrode active material may include one, or a mixture of two or more among a layered compound such as lithium manganese composite oxide (LiMn₂O₄, LiMnO₂ or the like), lithium cobalt oxide (LiCoO₂) or lithium nickel oxide (LiNiO₂) or a compound substituted with one or more transition metals; lithium manganese oxide such as a chemical formula of Li₁₊ₓMn₂₋ₓO₄ (herein, x is 0 to 0.33), LiMnO₃, LiMn₂O₃ or LiMnO₂; lithium copper oxide (Li₂CuO₂); vanadium oxide such as LiV₃O₈, LiFe₃O₄, V₂O₅ or Cu₂V₂O₇; Ni-site-type lithium nickel oxide represented by a chemical formula of LiNi₁₋ₓMₓO₂ (herein, M=Co, Mn, Al, Cu, Fe, Mg, B or Ga, and x=0.01 to 0.3); lithium manganese composite oxide represented by a chemical formula of LiMn₂₋ₓMₓO₂ (herein, M=Co, Ni, Fe, Cr, Zn or Ta, and x=0.01 to 0.1) or Li₂Mn₃MO₈ (herein, M=Fe, Co, Ni, Cu or Zn); LiMn₂O₄ in which some of Li in the chemical formula are substituted with alkaline earth metal ions; a disulfide compound; and Fe₂(MoO₄)₃.

In the present disclosure, the negative electrode is provided with a negative electrode current collector, and a negative electrode active material layer including a negative electrode active material, a conductor and a binder resin on at least one side surface of the current collector. The negative electrode may include, as the negative electrode active material, one, or a mixture of two or more selected from among lithium metal oxide; carbon such as non-graphitizable carbon or graphite-based carbon; metal composite oxides such as LiₓFe₂O₃ (0≤x≤1), LiₓWO₂ (0≤x≤1) and SnₓMe₁₋ₓMe'_{y}O_{z} (Me: Mn, Fe, Pb, Ge; Me': Al, B, P, Si, an element of group 1, 2 or 3 of the periodic table, halogen; 0<x≤1; 1≤y≤3; 1≤z≤8); lithium metal; lithium alloys; silicon-based alloys; tin-based alloys; metal oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄ and Bi₂O₅; conductive polymers such as polyacetylene; Li-Co-Ni-based materials; and titanium oxide.

In a specific embodiment of the present disclosure, the conductor may be, for example, any one selected from the group consisting of graphite, carbon black, carbon fiber or metal fiber, metal powder, conductive whisker, conductive metal oxides, activated carbon and polyphenylene derivatives, or a mixture of two or more of these conductive materials. More specifically, the conductor may be one selected from the group consisting of natural graphite, artificial graphite, super-p, acetylene black, ketjen black, channel black, furnace black, lamp black, thermal black, denka black, aluminum powder, nickel powder, zinc oxide, potassium titanate and titanium oxide, or a mixture of two or more of these conductive materials.

The current collector is not particularly limited as long as it has high conductivity without causing chemical changes to the corresponding battery, and for example, stainless steel, copper, aluminum, nickel, titanium, baked carbon, or aluminum or stainless steel of which surface is treated with carbon, nickel, titanium, silver or the like, and the like may be used.

As the binder resin, polymers commonly used in an electrode in the art may be used. Nonlimiting examples of such a binder resin may include polyvinylidene fluoride-co-hexafluoropropylene, polyvinylidene fluoride-co-trichloroethylene, polymethyl methacrylate, polyetylexyl acrylate, polybutyl acrylate, polyacrylonitrile, polyvinyl pyrrolidone, polyvinyl acetate, polyethylene-co-vinyl acetate, polyethylene oxide, polyarylate, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, carboxymethyl cellulose and the like, but are not limited thereto.

The electrode assembly prepared as above may be inserted into a proper case, and an electrolyte liquid is injected thereinto to manufacture a battery.

In the present disclosure, the electrolyte liquid includes one obtained by dissolving or dissociating a salt having a structure such as A⁺B⁻, in which A⁺ includes an ion consisting of an alkali metal cation such as Li⁺, Na⁺ or K⁺ or a combination thereof and B⁻ includes an ion consisting of an anion such as PF₆⁻, BF₄⁻, Cl⁻, Br⁻, I⁻, ClO₄⁻, AsF₆⁻, CH₃CO₂⁻, CF₃SO₃⁻, N(CF₃SO₂)₂⁻ or C(CF₂SO₂)₃⁻ or a combination thereof, in an organic solvent including propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethylmethyl carbonate (EMC), gamma butyrolactone (g-butyrolactone), an ester-based compound, or a mixture of one or more selected therefrom, however, the electrolyte liquid is not limited thereto.

Meanwhile, in a specific embodiment of the present disclosure, the organic solvent may include an ester-based compound. The ester-based compound may be preferably included in an amount of 30 wt% or greater, 50 wt% or greater, 60 wt% or greater or 65 wt% or greater relative to 100 wt% of the organic solvent.

In a specific embodiment of the present disclosure, the ester-based compound may include at least one selected from the group consisting of isobutyl propionate, isoamyl propionate, isobutyl butyrate, isopropyl propionate, methyl propionate, ethyl propionate, propyl propionate, butyl propionate, methyl acetate, ethyl acetate, propyl acetate, butyl acetate, methyl butyrate, ethyl butyrate, propyl butyrate, and butyl butyrate.

In addition, the present disclosure provides a battery module including the battery including the electrode assembly as a unit cell, a battery pack including the battery module, and a device including the battery pack as a power source. Specific examples of the device may include power tools operated by receiving power by an electric motor; electric motor vehicles including electric vehicles (EV), hybrid electric vehicles (HEV), plug-in hybrid electric vehicles (PHEV) and the like; electric two-wheeled bicycles including electric bicycles (E-bike) and electric scooters (E-scooter); electric golf carts; systems for power storage and the like, but are not limited thereto.

Hereinafter, the present disclosure will be described in detail with reference to examples in order to specifically describe the present disclosure. However, examples according to the present disclosure may be modified to various other forms, and the scope of the present disclosure should not be construed as being limited to the examples described below. The examples of the present disclosure are provided in order to more fully describe the present disclosure to those of ordinary skill in the art. Meanwhile, in the present disclosure, each of the embodiments may be implemented independently. Alternatively, two or more of the embodiments may be implemented in combination.

### Example

**[Table 1]**

| Properties of Polymer Columns Used | | |
|---|---|---|
| | Polymer Column 1 (Acrylic Polymer) (Example 1, Comparative Example 1) | Polymer Column 2 (Acrylic Polymer) (Example 2, Comparative Example 2, Comparative Example 3) |
| Phase Angle at Room Temperature (°¡Æ) | 0.5 | 0.8 |
| Storage Modulus (25°C, Pa) | 3,120 | 2,870 |
| Storage Modulus (60°C, Pa) | 1.1 | 0.7 |
| G' (60°C)/G' (Room Temperature) | 0.00035 | 0.00024 |
| tan δ peak (°C, 45°C to 80°C) | 62.6 | 54.2 |
| Degree of Crosslinking (%) | 81.0 | 65.8 |
| Swelling Ratio (%) | 350 | 800 |

### Measurement of Storage Modulus and Phase Angle of Polymer Column

A sample having a size of 40 cmx60 cm was prepared using a polymer material to be used as a polymer column in each of Comparative Examples and Examples. The thickness of the sample was 1 mm. A storage modulus was measured for the sample. The storage modulus was measured using a rheological property analyzer (dynamic mechanical analyzer (DMA), ARES-G2, TA Instrument). The storage modulus was determined by conducting a temperature sweep test under a temperature condition of - 60°C to 80°C (2°C/min) and a frequency of 1.0 rad/s. The results are summarized in Table 1. In addition, storage modulus and loss modulus were determined in the measurement, and a tan δ peak was determined therethrough.

### Measurement of Degree of Crosslinking of Polymer Column

0.3 g of a sample was prepared at 60°C using a polymer material to be used as a polymer column in each of Comparative Examples and Examples. The sample was placed on a mesh screen having a mesh size of 80 and dissolved in THF (tetrahydrofuran) for 24 hours, after which the weight of the remaining residue was compared with the initial weight. The degree of crosslinking was calculated based on the following [Equation 4]. The results are summarized in Table 1. 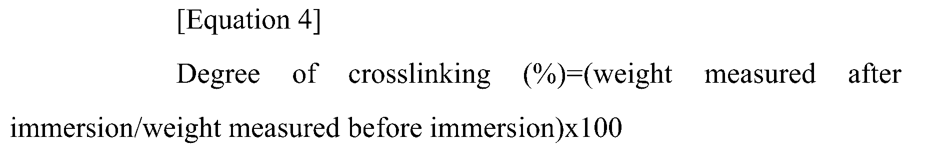 Degree of crosslinking (%)=(weight measured after immersion/weight measured before immersion)x100

### Measurement of Swelling Ratio of Polymer Column

0.3 g of a sample was prepared using a polymer material to be used as a polymer column in each of Comparative Examples and Examples. The sample was immersed in an electrolyte liquid solvent (EC/EMC=3/7 wt%) for 24 hours, and the residual volume was compared with the initial volume. The swelling ratio was calculated based on the following [Equation 5]. The results are summarized in Table 1. 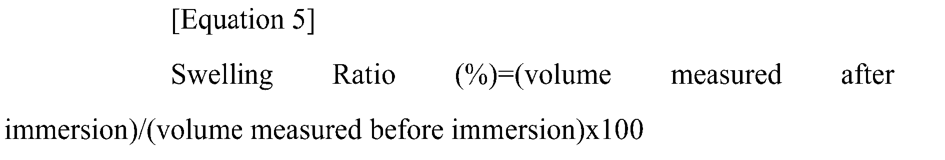 Swelling Ratio (%)=(volume measured after immersion)/(volume measured before immersion)x100

### Example 1

Inorganic particles (80.79 g), a binder resin (2.09 g) and a dispersant (1.12 g) were introduced to a solution of water and ethanol (95:5), and a dispersion process was performed using a bead mill to obtain a mixture.

Polymer column 1 (16 g) was introduced to the mixture, and the result was stirred to obtain a dispersion slurry. The concentration of the solid content in the dispersion slurry was 15 wt%. The dispersion slurry was applied on a porous substrate (Toray Corporation, B09PJ1, thickness 9 µm) using a micro-gravure coating method, and dried at a temperature of 80°C for 120 seconds to obtain a separator. In addition, the opposite surface was also coated and dried in the same manner to obtain a double-side-coated separator. In the separator, the loading amount was 5.5 g/m² based on the single side of the porous substrate. In addition, the thickness of the separator was 15 µm after compression. After that, the surface of the inorganic coating layer was subjected to corona discharge treatment in a range of a power density of 150 Wmin/m² and a rate of 100 mpm (meter per minute). The surface treatment area was 100% based on 100% of the surface of the inorganic coating layer on one side of the separator.

### Example 2

Inorganic particles (80.79 g), a binder resin (2.09 g) and a dispersant (1.12 g) were introduced to a solution of water and ethanol (95:5), and a dispersion process was performed using a bead mill to obtain a mixture. The concentration of the solid content in the mixture was 15 wt%. The mixture was applied on a porous substrate (Toray Corporation, B09PJ1, thickness 9 µm) using a micro-gravure coating method, and dried at a temperature of 80°C for 120 seconds to prepare an inorganic coating layer. Then, a second polymer column (Hansol Chemical Co., Ltd., HES40, D₅₀=900 nm) was dispersed in water to prepare a dispersion having a solid content concentration of 6.0 wt%, and the dispersion was applied on the surface of the inorganic coating layer, and dried. In addition, the opposite surface of the porous substrate was also coated and dried in the same manner for double-side-coating. On each surface, the surface coverage of the separator by the second polymer column was 43%, and the loading amount of the inorganic coating layer was 5.4 g/m² based on the single side of the porous substrate. In addition, the total thickness of the separator was 15 µm. After that, surfaces on both sides of the inorganic coating layer were subjected to corona discharge treatment in a range of a power density of 150 Wmin/m² and a rate of 100 mpm (meter per minute). The surface treatment area was 100% based on 100% of the surface of the inorganic coating layer on one side of the separator.

### Comparative Example 1

A separator was manufactured in the same manner as in Example 1, except that the corona discharge treatment was not performed. The thickness of the separator was 15 µm.

### Comparative Example 2

A separator was manufactured in the same manner as in Example 2, except that the corona discharge treatment was not performed. The thickness of the separator was 15 µm.

### Comparative Example 3

A separator was manufactured in the same manner as in Example 2, except that the surface coverage by the second polymer column was 85%.

### Comparative Example 4

Inorganic particles (80.0 g), a binder resin (Solvay S.A., Solef 20808) (18.0 g) and a dispersant (Eco-chemical Co., Ltd., CEPV157) (2.0 g) were introduced to acetone, and a dispersion process was performed using a bead mill to obtain a mixture. The concentration of the solid content in the mixture was 20 wt%. The mixture was applied on a porous substrate (Toray Corporation, B09PJ1, thickness 9 µm) using a micro-gravure coating method, phase-separated under conditions of a temperature of 40°C and a relative humidity of 60%, and dried at a temperature of 80°C for 120 seconds to obtain a separator. In addition, the opposite surface was also coated and dried in the same manner to obtain a double-side-coated separator. In the separator, the loading amount was 5.5 g/m² based on the single side of the porous substrate. In addition, the thickness of the separator was 15 µm. After that, the surface of the separator was subjected to corona discharge treatment in a range of a power density of 150 Wmin/m² and a rate of 100 mpm (meter per minute). The surface treatment area was 100% based on 100% of the surface of the inorganic coating layer on one side of the separator.

Types and contents of the components used in each of the Examples and the Comparative Examples are summarized in the following Table 2.

**[Table 2]**

| | | Example 1 | Example 2 | Compara tive Example 1 | Compara tive Example 2 | Compara tive Example 3 | Compara tive Example 4 |
|---|---|---|---|---|---|---|---|
| Polyme r Colum n | D₅₀ (nm) | 4,500 | 900 | 4,500 | 900 | 900 | n/a |
| | D₁₀₀ (nm) | 7,500 | 1,250 | 7,500 | 1,250 | 1,250 | n/a |
| Inorga nic Particle s | Component | Al₂O₃ | Al₂O₃ | Al₂O₃ | Al₂O₃ | Al₂O₃ | Al₂O₃ |
| | D₅₀ (nm) | 500~800 | 500~800 | 500~800 | 500~800 | 500~800 | 500~800 |
| | Content in Coating Layer (wt%) | 80.8 | 80.0 | 80.8 | 80.0 | 80.0 | 80.0 |
| Dispers ant | Component | CMC-Na | CMC-Na | CMC-Na | CMC-Na | CMC-Na | Cyanoet hyl PVA |
| | Content in Coating Layer (wt%) | 1.1 | 1.1 | 1.1 | 1.1 | 1.1 | 2.0 |
| Binder Resin | Component | Acryl-based | Acryl-based | Acryl-based | Acryl-based | Acryl-based | PVdF-based |
| | Content in Coating Layer (wt%) | 2.1 | 2.0 | 2.1 | 2.0 | 2.0 | 18.0 |
| Coating Loading (g/m²) | | 11.0 | 10.8 | 11.0 | 10.8 | 10.8 | 11.0 |

### Manufacture of Negative Electrode

A negative electrode slurry was formed by mixing artificial graphite as a negative electrode active material, carbon black as a conductor, carboxymethyl cellulose as a dispersant, and a styrene-butadiene emulsion as a binder in a weight ratio of 96:0.5:1.5:2.0, respectively, and adding the mixture to water, a solvent. The negative electrode slurry was coated on a copper current collector at a loading amount of 4.0 mAh/cm², and dried to manufacture a negative electrode in which a negative electrode active material layer is formed.

### Evaluation of Dry Adhesion between Electrode-Separator

The separator sample obtained in each of the Examples and the Comparative Examples was cut to a size of 100 mm (length)x25 mm (width) to prepare each specimen. Each specimen was laminated with the negative electrode, and then hot-pressed at 70°C for 20 seconds to obtain a laminate. The laminate was fixed to an adhesive strength measurement device (LLOYD Instrument, LF plus), the separator portion was peeled at an angle of 180° at a rate of 25 mm/min at 25°C, and the corresponding strength was measured.

Referring to the following Table 3, it was confirmed that Examples 1 and 2 exhibited higher adhesion than Comparative Examples 1 and 2, and secured 60 gf/25 mm or greater, thereby ensuring battery assembly processability. Meanwhile, it was confirmed that Comparative Examples 3 and 4 exhibited high adhesion, however, lithium precipitation occurred in the central portion of the cell after battery assembly.

### Measurement of Permeability

The time (sec) required for 100 cc of air to pass through the separator under a constant pressure (0.05 MPa) was measured using permeability tester (manufacturer: Asahi Seiko, product name: EG01-55-1MR). The measurement was performed at three points in total, one point each at the left, center and right of the sample, and the average value was recorded.

### Measurement of Adhesion between Electrode and Separator after Injecting Electrolyte Liquid

A positive electrode active material slurry was prepared by adding LiCoO₂ as a positive electrode active material, carbon black as a conductor, and polyvinylidene fluoride (PVdF) as a binder to N-methyl pyrrolidone (NMP), a solvent, in a weight ratio of 96:2:2. The positive electrode active material slurry was coated on a sheet-shaped aluminum current collector and dried, such that a positive electrode active material layer having a final positive electrode loading amount of 3.8 mAh/cm² was formed.

The separator of each of the Examples and the Comparative Examples was interposed between the positive electrode and the negative electrode to manufacture an electrode assembly, and after inserting the electrode assembly into a battery case, an electrolyte liquid was injected thereinto, and the case was sealed to manufacture a battery. As the electrolyte liquid, a mixture including ethylene carbonate and ethylmethyl carbonate in a volume ratio of 7:3 was used, and LiPF₆ having a concentration of 1 M was added thereto.

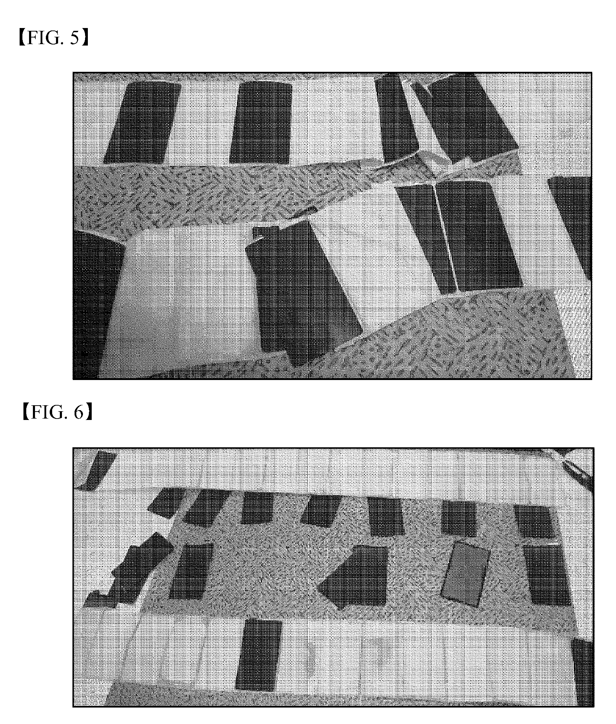

The manufactured battery was subjected to three charge and discharge cycles at a rate of 0.2 C, and then disassembled in a fully charged state. In the dissembled state, the separator/electrode laminate was placed vertically, and the occurrence of delamination was examined between the electrode and the separator. As shown in FIGS. 4 and 5, no delamination was observed between the separator and the electrode in the battery using the separator of each of Examples 1 and 2. However, as shown in FIG. 6, the electrode was delaminated from the separator in the battery using the separator of Comparative Example 1.

**[Table 3]**

| | Exa mple 1 | Exa mple 2 | Comparati ve Example 1 | Comparati ve Example 2 | Comparati ve Example 3 | Comparati ve Example 4 |
|---|---|---|---|---|---|---|
| Air Permeability (sec/100 cc) | 100 | 100 | 100 | 100 | 100 | 110 |
| Surface Area of Polymer Column | 12% | 43% | 12% | 43% | 85% | 100% |
| Particle Diameter (D₅₀) of Polymer Column (µm) | 4.5 | 0.9 | 4.5 | 0.9 | 0.9 | n/a |
| Protruding Height of Polymer Column (µm) before Compression | 3.5 | 0.7 | 3.5 | 0.7 | 0.7 | n/a |
| Adhesion (gf/25 mm) (Dry Adhesion before Injection) | 75 | 65 | 35 | 25 | 60 | 80 |
| Lithium Precipitation | OK | OK | OK | OK | NG | NG |
| Adhesion between Electrode and Separator after Injecting Electrolyte Liquid (Wet Adhesion) | OK | OK | NG | NG | NG | OK |

### [Reference Numeral]

10 Porous Substrate
20 Inorganic Coating Layer
101 First Polymer Column
102 Second Polymer Column
200 Inorganic Particles
Tₛ Thickness of Separator
Tₚ Protruding Height of Polymer Column
Tᵢ Height of Inorganic Particle-Filled Portion, T_{c} Height of Inorganic Coating Layer

## Claims

1. A separator for an electrochemical device, the separator comprising:
a porous polymer substrate; and
an inorganic coating layer covering one surface or both surfaces of the porous polymer substrate,
wherein the inorganic coating layer includes a plurality of inorganic particles, a binder resin, and a plurality of adhesive polymer columns, and the polymer column is a particulate material having a predetermined volume, the particulate material being made of a polymer material and having no pores,
the inorganic coating layer has at least all or a portion of the surface subjected to corona discharge treatment, and
the inorganic coating layer includes polymer column(s) semi-buried in the inorganic coating layer so that at least a portion of the surface thereof protrudes, polymer column(s) disposed on the surface of the inorganic coating layer, or both.

2. The separator of claim 1, wherein the inorganic coating layer includes both first polymer column(s) semi-buried in the inorganic coating layer so that at least a portion of the surface thereof protrudes and second polymer column(s) disposed on the surface of the inorganic coating layer, and a diameter D₅₀ of the second polymer column is greater than or equal to a diameter D₅₀ of the first polymer column.

3. The separator of claim 1, wherein, in the inorganic coating layer, at least one of the polymer columns is spaced apart from another polymer column by a predetermined distance, and distributed in a sea-island pattern.

4. The separator of claim 2, wherein at least a portion of the first polymer column is exposed on the surface of the inorganic coating layer while another portion thereof is in contact with the surface of the porous substrate.

5. The separator of claim 2, wherein, in the inorganic coating layer, spaces between the first polymer columns are filled with an inorganic particle-filled portion, and the inorganic particle-filled portion includes inorganic particles and a binder resin.

6. The separator of claim 1, wherein the polymer column has a storage modulus (G') of 100 Pa to 3,500 Pa or less at room temperature.

7. wherein the polymer column has a phase angle of less than 35¡Æ ° at room temperature, and the phase angle (δ) is calculated according to the following Equation 1: $δ = {tan}^{- 1} \left(G"/G′\right)$ in Equation 1, G' is a storage modulus (G'), and G" is a loss modulus (G").

8. The separator of claim 1, wherein the polymer column has a storage modulus (G') of 0.05 to 10 at 60°C.

9. The separator of claim 1, wherein the polymer column has a ratio of a storage modulus (G') at 60°C to a storage modulus (G') at room temperature (G' (60°C)/G' (room temperature)) of 0.1 or less.

10. The separator of claim 1, wherein the polymer column has at least one tan δ peak in a range of 45°C to 80°C when measured using a dynamic mechanical analyzer (DMA, Rheovibron).

11. The separator of claim 1, wherein the polymer column has a degree of crosslinking (gel fraction) of 50% or greater.

12. The separator of claim 2, wherein a thickness (Tᵢ) of an inorganic particle-filled portion is 5% or greater and 40% or less of the diameter D₅₀ of the first polymer column.

13. The separator of claim 1, wherein the inorganic particle-filled portion has a height (Tᵢ) of 2 µm or less than 2 µm.

14. The separator of claim 2, wherein the D₅₀ of the first polymer column is at least twice a D₅₀ of the inorganic particles.

15. The separator of claim 2, wherein a thickness (Tᵢ) of the inorganic particle-filled portion is 85% or less of the D₅₀ of the first polymer column.

16. The separator of claim 2, wherein a D₁₀ of the first polymer column is 30% or greater of the D₅₀ of the first polymer column, and a D₉₀ of the first polymer column is 200% or less of the D₅₀ of the first polymer column.

17. The separator of claim 2, wherein an area occupied by the first polymer columns is 10% to 50% relative to 100% of the surface area of the inorganic coating layer based on a top-view image of the separator.

18. The separator of claim 1, wherein the inorganic coating layer has a pore structure formed by an interstitial volume between the inorganic particles.

19. The separator of claim 1, wherein the polymer column(s) semi-buried in the inorganic coating layer so that at least a portion of the surface thereof protrudes are the first polymer column(s), and the first polymer column has a D₅₀ of 2.0 µm to 7.0 µm.

20. The separator of claim 1, wherein the polymer column(s) disposed on the surface of the inorganic coating layer are the second polymer column(s), and the second polymer column has a D₅₀ of about 0.1 µm to 1.5 µm.
